(19) Europäisches Patentamt
European Patent Office
Office européen des brevets

(11) **EP 4 715 634 A1**

(12) **EUROPEAN PATENT APPLICATION**

(43) Date of publication:
25.03.2026 Bulletin 2026/13

(21) Application number: 25190903.2

(22) Date of filing: 22.07.2025

(51) International Patent Classification (IPC):
**G06F 17/11** (2006.01)   **G06F 17/00** (2019.01)
**G06F 17/10** (2006.01)

(52) Cooperative Patent Classification (CPC):
**G06F 17/00; G06F 17/10; G06F 17/11**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.08.2024 JP 2024135013**

(71) Applicant: **FUJITSU LIMITED**
**Kawasaki-shi, Kanagawa 211-8588 (JP)**

(72) Inventor: **SONODA, Nasa**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, DATA PROCESSING APPARATUS, AND DATA PROCESSING METHOD**

(57) A processing unit determines, from a plurality of solutions to a combinatorial optimization problem stored in a storage unit, a plurality of higher-ranked solutions based on evaluation function values of the plurality of solutions, determines, for each of the plurality of higher-ranked solutions, a selection probability such that higher-ranked solutions having evaluation function values closer to that of the highest-ranked solution among the plurality of higher-ranked solutions are more likely to be selected, selects a first solution from the plurality of higher-ranked solutions according to the selection probabilities, selects a second solution different from the first solution, from the plurality of solutions, generates a third solution with a path relinking method using the selected first solution and second solution, and performs a solution search on the combinatorial optimization problem using the third solution as an initial solution.

FIG. 1

## Description

FIELD

The embodiments discussed herein relate to a computer program, a data processing apparatus, and a data processing method.

BACKGROUND

In a search for a solution to a combinatorial optimization problem, a method called path relinking may be used to generate a new solution from a plurality of provisional solutions held in a solution pool. See, for example, F. Glover, "Tabu search and adaptive memory programing - Advances, applications and challenges," In R.S. Barr, R.V. Helgason, and J.L. Kennington, editors, Interfaces in Computer Science and Operations Research, Kluwer, 1996, pages 1-75. See, also, Y. Wang et al, "Path relinking for unconstrained binary quadratic programming," European Journal of Operational Research 223, 2012, pp.595-604. The newly generated solution is used as an initial solution for a further solution search.

In a general path relinking method, the best solution (a solution having the best evaluation function value) is selected from a plurality of solutions held in a solution pool, another solution is randomly selected from the remaining solutions, and an initial solution is generated using both the selected solutions. By generating the initial solution using the best solution, the initial solution generated is similar to the best solution.

There is a method in which, when searching for a solution to a constrained combinatorial optimization problem, the constraints are temporarily relaxed during the search process in order to ensure diversity in a solution candidate group (for example, refer to International Publication Pamphlet No. WO 2020/235649).

In the conventional path relinking method in which an initial solution is generated using the best solution, the initial solution largely depends on the best solution, and it is highly unlikely to generate an initial solution that is largely different from the best solution. Therefore, a search of a wide search space is hindered. If two solutions are randomly selected from a plurality of solutions in the solution pool and an initial solution is generated using the path relinking method in order to expand the search space, a search space in which a good solution may be obtained is searched to the same extent as other search spaces, which is inefficient.

SUMMARY

In one aspect, the present disclosure aims to efficiently search for a solution in a wide search space.

In one aspect, there is provided a computer program that causes a computer to perform a process including: determining, from a plurality of solutions to a combinatorial optimization problem, a plurality of higher-ranked solutions, based on evaluation function values of the plurality of solutions, the plurality of solutions being stored in storage means; determining selection probabilities for the plurality of higher-ranked solutions, respectively, such that a higher-ranked solution having the evaluation function value closer to the evaluation function value of a highest-ranked solution among the plurality of higher-ranked solutions than the evaluation function value of another higher-ranked solution is more likely to be selected than said another higher-ranked solution; selecting a first solution from the plurality of higher-ranked solutions according to the selection probabilities; selecting a second solution from the plurality of solutions, the second solution being different from the first solution; generating a third solution with a path relinking method using the selected first solution and the selected second solution; and performing a solution search on the combinatorial optimization problem using the third solution as an initial solution.

BRIEF DESCRIPTION OF DRAWINGS

FIG. 1 illustrates an example of a data processing apparatus according to a first embodiment;
FIG. 2 illustrates an example of hardware of a data processing apparatus according to a second embodiment;
FIG. 3 is a block diagram illustrating an example of functions of the data processing apparatus;
FIG. 4 is a flowchart illustrating a processing procedure for an example of a solution search performed by the data processing apparatus;
FIG. 5 is a flowchart illustrating a processing procedure for an example of an initial solution generation process;
FIG. 6 illustrates an example of determining candidate solutions;
FIG. 7 illustrates an example of generating hash values;
FIG. 8 illustrates an example of calculation of $d_k$ and $f(d_k)$ and an example of normalization;
FIG. 9 illustrates an example of selecting Solution A;

FIG. 10 illustrates an example of selecting Solution B;

FIG. 11 illustrates an example of generating Solution C;

FIG. 12 is a flowchart illustrating a processing procedure for an example of an initial solution generation process according to a modification;

FIG. 13 illustrates an example in which the number K of candidate solutions varies;

FIGS. 14A and 14B illustrate experimental examples of solution searches for combinatorial optimization problems; and

FIG. 15 illustrates another example of the data processing apparatus.

DESCRIPTION OF EMBODIMENTS

Hereinafter, embodiments will be described with reference to the drawings.

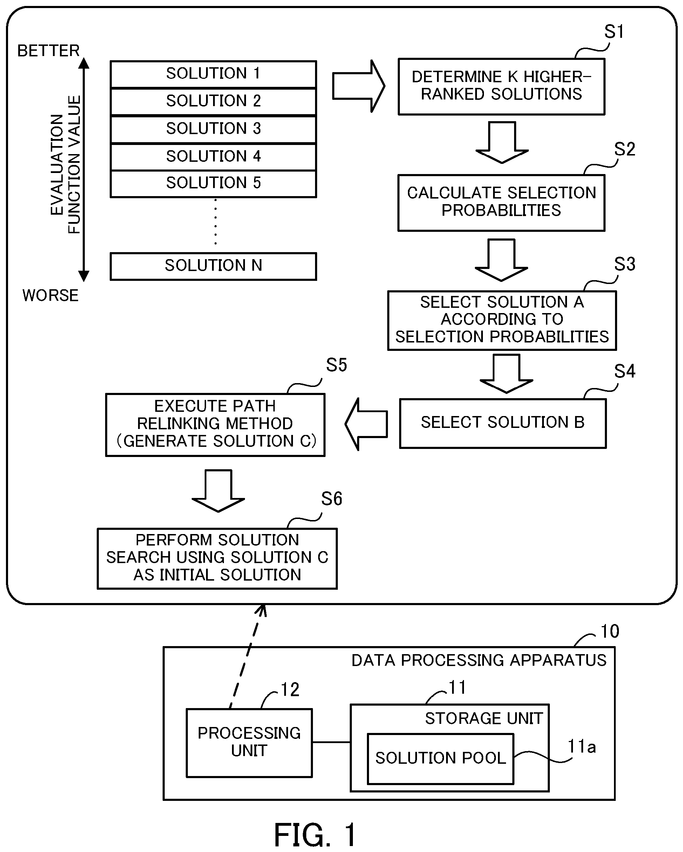

FIG. 1 illustrates an example of a data processing apparatus according to a first embodiment.

The data processing apparatus 10 according to the first embodiment searches for a solution to a combinatorial optimization problem and also generates an initial solution using a path relinking method. The data processing apparatus 10 may be a client apparatus or a server apparatus. The data processing apparatus 10 may be referred to as a computer.

The data processing apparatus 10 according to the first embodiment includes a storage unit 11 and a processing unit 12.

The storage unit 11 may include a volatile semiconductor memory such as a random access memory (RAM) or may include a non-volatile storage device such as a hard disk drive (HDD) or a flash memory. The storage unit 11 may include both a volatile semiconductor memory and a non-volatile storage device.

The storage unit 11 stores a plurality of solutions to a combinatorial optimization problem. In the example of FIG. 1, the plurality of solutions are held in a solution pool 11a created in the storage unit 11. The solution pool 11a may hold solutions and the evaluation function values of the solutions.

Further, the storage unit 11 may store problem information on the combinatorial optimization problem. The combinatorial optimization problem may be formulated as an Ising type evaluation function. The combinatorial optimization problem is replaced with, for example, a problem that minimizes the value of the Ising type evaluation function.

For example, the Ising type evaluation function is defined as Equation (1).

$$E(\boldsymbol{x}) = - \sum_{<i,j>} W_{ij} x_i x_j - \sum_i b_i x_i \qquad (1)$$

The state vector x has a plurality of state variables as elements and represents a state of the Ising model. Equation (1) is an evaluation function formulated in a quadratic unconstrained binary optimization (QUBO) format. In the case of solving a problem that maximizes the value of the evaluation function, the signs of the evaluation function may be reversed. The solution to the combinatorial optimization problem may be represented by the state vector x.

The first term on the right-hand side of Equation (1) is the sum of the products of the values of two state variables and a weight coefficient over all possible pairs of state variables selectable from all state variables without omission or repetition. The subscripts i and j are the indices of the state variables. Here, $x_i$ denotes the i-th state variable, and $x_j$ denotes the j-th state variable. $W_{ij}$ is a weight coefficient that indicates the weight or the coupling strength between the i-th state variable and the j-th state variable. Note that $W_{ij} = W_{ji}$ and $W_{ii} = 0$.

The second term on the right-hand side of Equation (1) is the sum of the products of the bias and value of each of all the state variables. Here, $b_i$ denotes the bias applied to the i-th state variable. Problem information on a combinatorial optimization problem includes weight coefficients, biases, and others included in an evaluation function as described above.

The storage unit 11 may further store calculation conditions for the solution search. As a solution search method, for example, a local search method such as a simulated annealing (SA) method, a replica exchange method, or a tabu search method is applicable. In the case of a solution search by SA is performed, the calculation conditions include, for example, a maximum value of a temperature parameter, a temperature parameter change schedule, a minimum value of the temperature parameter, and a search end condition.

In addition, the storage unit 11 may store the number (K) of higher-ranked solutions to be described later, for use in a process of generating an initial solution with the path relinking method.

The processing unit 12 may be implemented by an electronic circuit such as an application specific integrated circuit (ASIC) or a field programmable gate array (FPGA). Alternatively, the processing unit 12 may also be implemented by a processor such as a central processing unit (CPU), a graphics processing unit (GPU), or a digital signal processor (DSP). The processor executes, for example, a program stored in a memory (which may be the storage unit 11) such as RAM. A collection of processors may also be referred to as a multiprocessor or simply a "processor". The processing unit 12 may include a processor and an electronic circuit such as an ASIC or an FPGA.

The processing unit 12 searches for a solution to the combinatorial optimization problem. As a solution search method, for example, a local search method such as the SA method, the replica exchange method, or the Tabu search method is applicable as described above. Further, the processing unit 12 generates an initial solution using the path relinking method. In this connection, unlike the conventional path relinking method, the processing unit 12 generates an initial solution in accordance with the following process.

FIG. 1 illustrates an example flow of a process performed by the processing unit 12. In the following description, it is assumed that a solution search is performed a plurality of times (hereinafter, referred to as N times) in advance and N provisional solutions (solution 1 to solution N) are held in the solution pool 11a.

Step S1: The processing unit 12 determines a plurality of higher-ranked solutions from among the N solutions to a combinatorial optimization problem stored in the storage unit 11, based on the evaluation function values of the N solutions. The higher-ranked solutions are determined, preferentially from the solution having the best evaluation function value. In the case of solving a problem that minimizes the evaluation function value, higher-ranked solutions are determined from among the N solutions, preferentially from the solution having the lowest evaluation function value.

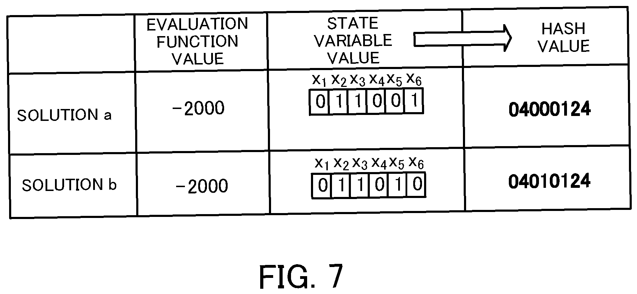

The number of higher-ranked solutions to be determined may be set in advance. In the example of FIG. 1, K (K $\geq$ 2) higher-ranked solutions are determined. In the case where a plurality of solutions have the same evaluation function value, the processing unit 12 may rank the solutions based on their hash values that may be generated from the state variables of the solutions (see FIG. 7 to be described later).

Step S2: The processing unit 12 determines, for each of the K higher-ranked solutions, a selection probability such that higher-ranked solutions having evaluation function values closer to that of the highest-ranked solution are more likely to be selected. For example, the processing unit 12 determines the selection probabilities as follows.

First, the processing unit 12 calculates the differences between the evaluation function value of the highest-ranked solution and the evaluation function value of each of the K higher-ranked solutions. Then, the processing unit 12 inputs the calculated differences into a probability density function to calculate the probability density of each of the K higher-ranked solutions. As the probability density function, for example, a Gaussian distribution as in Equation (2) may be used.

$$ f(d_k) = \frac{1}{\sqrt{2\pi\sigma^2}} exp\left( - \frac{(d_k - \mu)^2}{2\sigma^2} \right) \tag{2} $$

In Equation (2), $d_k$ denotes the difference between the evaluation function value of the highest-ranked solution among the K higher-ranked solutions and the evaluation function value of the k-th higher-ranked solution. $\rho$ denotes the standard deviation of $d_k$ and is determined based on the K higher-ranked solutions. Further, by setting $\mu$ to 0, the processing unit 12 is able to increase the probability density as the evaluation function value of a higher-ranked solution is closer to the evaluation function value of the highest-ranked solution.

As the probability density function, for example, a Laplace distribution as in Equation (3) may also be used.

$$ f(d_k) = \frac{1}{2b} exp\left( - \frac{|d_k - \mu|}{b} \right) \tag{3} $$

In Equation (3), b is a predetermined scale parameter. By setting $\mu$ to 0, the processing unit 12 is able to increase the probability density as the evaluation function value of a higher-ranked solution is closer to the evaluation function value of the highest-ranked solution.

The processing unit 12 normalizes the probability densities so that the sum of the calculated K probability densities becomes 1, and sets the normalized probability densities as the selection probabilities of the higher-ranked solutions. Using these selection probabilities, any one of the K solutions may be selected. In the case where the evaluation function values of the K higher-ranked solutions are all the same, the processing unit 12 may set the selection probability of each of the K higher-ranked solutions to 1/K.

The method of determining the selection probabilities is not limited to the above example. Predetermined values may be set as the selection probabilities. For example, in the case of K = 4, the selection probability of the highest-ranked solution may be set to 0.4, the selection probability of the second highest-ranked solution may be set to 0.3, the selection probability of the third-ranked highest solution may be set to 0.2, and the selection probability of the lowest-ranked highest solution may be set to 0.1.

Step S3: The processing unit 12 selects one of two solutions (hereinafter, referred to as Solution A) used for generating an initial solution with the path relinking method, from the K higher-ranked solutions according to the determined selection probabilities.

Step S4: The processing unit 12 selects a solution (hereinafter, referred to as Solution B) different from Solution A from the N solutions. For example, the processing unit 12 randomly selects one of the N solutions as Solution B, which is different from Solution A. In this connection, the processing unit 12 may select Solution B according to a predetermined rule, or may calculate the selection probability as described above for each of the N solutions and select Solution B different from Solution A according to the selection probabilities.

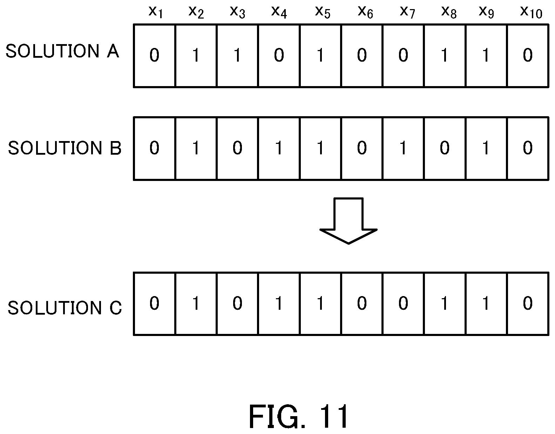

Step S5: The processing unit 12 generates new Solution C with the path relinking method using the selected solutions A and B. In the path relinking method, using the values of the state variables of Solution A as a base, the processing unit 12 replaces one or more of the state variables of Solution A whose values are different from those of Solution B with the values of the corresponding state variables of Solution B, thereby generating Solution C. For example, in the case where the values of the state variables $x_i$, $x_j$, $x_k$, and $x_l$ differ between Solution A and Solution B, the processing unit 12 generates Solution C by replacing the values of $x_i$ and $x_j$ of Solution A, which are included in these state variables, with the values of $x_i$ and $x_j$ of Solution B. A more specific example of generating Solution C will be described later (see FIG. 11).

Step S6: The processing unit 12 performs a solution search on the combinatorial optimization problem using Solution C as an initial solution.

Although not illustrated in FIG. 1, after step S6, it is determined whether a rewrite condition for the solution pool 11a is satisfied. If it is determined that the rewrite condition is satisfied, the solution pool 11a is rewritten. For example, in the case where the solution obtained by the solution search is better than the worst solution among the N solutions stored in the storage unit 11, the processing unit 12 determines that the rewrite condition is satisfied. At this time, the processing unit 12 rewrites the solution pool 11a by replacing the worst solution with the solution obtained by the current solution search. Alternatively, in the case where the solution obtained by the solution search is better than the best solution (corresponding to the highest-ranked solution described above) among the N solutions stored in the storage unit 11, the processing unit 12 may replace the worst solution with the solution obtained by the current solution search.

The above process is repeated until a predetermined search end condition is satisfied. When the search end condition is satisfied, for example, the best solution among the N solutions held in the solution pool 11a is output as the solution search result for the combinatorial optimization problem.

As described above, the data processing apparatus 10 determines K higher-ranked solutions from N solutions to the combinatorial optimization problem stored in the storage unit 11, based on the evaluation function values of the N solutions. The data processing apparatus 10 determines, for each of the K higher-ranked solutions, a selection probability such that higher-ranked solutions having evaluation function values closer to that of the highest-ranked solution among the K higher-ranked solutions are more likely to be selected. Then, the data processing apparatus 10 selects Solution A from the K higher-ranked solutions according to the selection probabilities, selects Solution B different from Solution A from the N solutions, and generates Solution C with the path relinking method using the selected solutions A and B. The data processing apparatus 10 performs a solution search on the combinatorial optimization problem using Solution C as an initial solution. As a result, a higher-ranked solution other than the best solution is stochastically selected as Solution A, and Solution C to be used as an initial solution is less likely to be confined to the vicinity of the best solution. That is, diversity is ensured for Solution C to be used as an initial solution. Accordingly, a wide search space is efficiently searched. As a result, an improvement in the solving performance is expected.

In addition, the data processing apparatus 10 dynamically adjusts the selection probabilities according to the differences between the evaluation function value of the highest-ranked solution and the evaluation function value of each of the K higher-ranked solutions, which makes it possible to stochastically select solutions other than the highest-ranked solution (best solution) while giving importance to the highest-ranked solution.

(Second Embodiment)

Next, a second embodiment will be described.

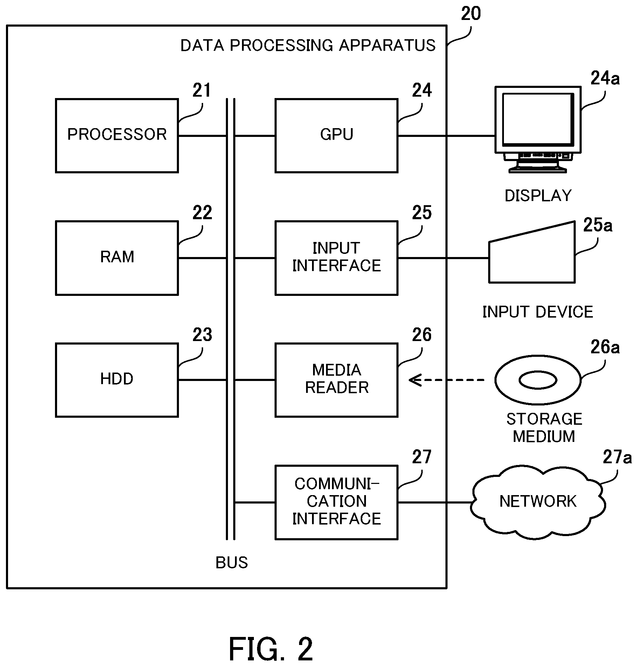

FIG. 2 illustrates an example of hardware of a data processing apparatus according to the second embodiment.

The data processing apparatus 20 searches for a solution to a combinatorial optimization problem and also generates an initial solution with a path relinking method. The data processing apparatus 20 may be referred to as a computer. The data processing apparatus 20 may be a client apparatus or a server apparatus.

The combinatorial optimization problem is formulated as, for example, the evaluation function of Equation (1). The data processing apparatus 20 searches for a solution to the combinatorial optimization problem by executing a solving method such as the SA method or the tabu search method based on the evaluation function.

The data processing apparatus 20 includes a processor 21, a RAM 22, an HDD 23, a GPU 24, an input interface 25, a media reader 26, and a communication interface 27. The units are connected to a bus. The processor 21 corresponds to the processing unit 12 of the first embodiment. The RAM 22 or the HDD 23 corresponds to the storage unit 11 of the first embodiment.

The processor 21 is a processor such as a GPU or a CPU including an arithmetic circuit that executes program instructions. The processor 21 loads at least part of a program or data stored in the HDD 23 into the RAM 22 and executes the program. The processor 21 may include a plurality of processor cores. The data processing apparatus 20 may include a plurality of processors. A processor that performs a certain process among a plurality of processes performed by the data processing apparatus 20 may be different from a processor that performs a process different from the certain process among the plurality of processes. The processor may be referred to as processor circuitry. A set of a plurality of processors (multiprocessor) may be referred to as a "processor".

The RAM 22 is a volatile semiconductor memory that temporarily stores programs to be executed by the processor 21 and data to be used by the processor 21 during processing. The data processing apparatus 20 may include a memory of a type other than the RAM 22, or may include a plurality of memories.

The HDD 23 is a non-volatile storage device that stores software programs such as an operating system (OS), middleware, and application software, and data. The program includes, for example, a program that causes the data processing apparatus 20 to perform a process of searching for a solution to a combinatorial optimization problem or generating an initial solution. The data processing apparatus 20 may include another type of storage device such as a flash memory or a solid state drive (SSD), or may include a plurality of non-volatile storage devices.

The GPU 24 outputs images to a display 24a connected to the data processing apparatus 20 in accordance with instructions from the processor 21. As the display 24a, a cathode ray tube (CRT) display, a liquid crystal display (LCD), a plasma display panel (PDP), an organic electro-luminescence (OEL) display, or another may be used.

The input interface 25 acquires input signals from an input device 25a connected to the data processing apparatus 20 and outputs the input signals to the processor 21. As the input device 25a, a pointing device such as a mouse, a touch panel, a touch pad, or a track ball, a keyboard, a remote controller, a button switch, or another may be used. A plurality of types of input devices may be connected to the data processing apparatus 20.

The media reader 26 is a reading device that reads programs and data from a storage medium 26a. As the storage medium 26a, for example, a magnetic disk, an optical disc, a magneto-optical disk (MO), a semiconductor memory, or another may be used. Magnetic disks include a flexible disk (FD) and an HDD. Optical discs include a compact disc (CD) and a digital versatile disc (DVD).

For example, the media reader 26 copies a program or data read from the storage medium 26a to another storage medium such as the RAM 22 or the HDD 23. The read program is executed by, for example, the processor 21. The storage medium 26a may be a portable storage medium, and may be used to distribute programs and data. The storage medium 26a and the HDD 23 may be referred to as computer-readable storage media.

The communication interface 27 is connected to a network 27a and communicates with other information processing apparatuses via the network 27a. The communication interface 27 may be a wired communication interface connected to a communication device such as a switch via a cable, or may be a wireless communication interface connected to a base station via a wireless link.

Next, the functions of the data processing apparatus 20 will be described.

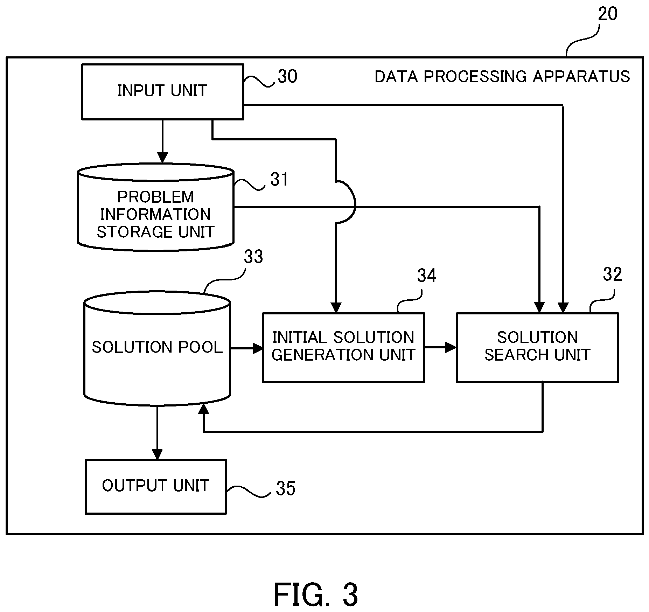

FIG. 3 is a block diagram illustrating an example of functions of the data processing apparatus.

The data processing apparatus 20 includes an input unit 30, a problem information storage unit 31, a solution search unit 32, a solution pool 33, an initial solution generation unit 34, and an output unit 35.

With these units, the same functions as the storage unit 11 and the processing unit 12 illustrated in FIG. 1 are implemented.

The problem information storage unit 31 and the solution pool 33 are implemented by using a storage space secured in the RAM 22 or the HDD 23. The input unit 30, the solution search unit 32, the initial solution generation unit 34, and the output unit 35 may be implemented by using, for example, program modules executed by the processor 21 and a storage space (a register or a cache memory) in the processor 21.

The input unit 30 receives inputs of problem information on a combinatorial optimization problem, calculation conditions, and others. The problem information on the combinatorial optimization problem includes, for example, weight coefficients, biases, and others included in the evaluation function of Equation (1). The input unit 30 may receive an input of the number (K) of higher-ranked solutions that are candidates for Solution A used for generating an initial solution (Solution C) with the path relinking method. These pieces of information may be input by a user operating the input device 25a or may be received from another computer via the network 27a.

The problem information storage unit 31 stores the problem information on the combinatorial optimization problem. The problem information storage unit 31 may store other information such as calculation conditions for a solution search and the number (K) of higher-ranked solutions that are candidates for Solution A.

The solution search unit 32 performs a solution search based on the problem information on the combinatorial optimization problem and the calculation conditions. In the solution search, for example, a local search method such as the tabu search method, the SA method, or the replica exchange method is applicable.

The solution pool 33 holds a plurality of solutions obtained as a result of performing the solution search on the combinatorial optimization problem. The solution pool 33 may hold, together with the solutions, the evaluation function values of the solutions.

The initial solution generation unit 34 generates an initial solution with the path relinking method using a plurality of solutions held in the solution pool 33.

When the search end condition is satisfied, the output unit 35 outputs the best solution held in the solution pool 33 as a solution search result for the combinatorial optimization problem. For example, the output unit 35 may output and display a calculation result on the display 24a, may transmit the calculation result to another information processing apparatus via the network 27a, or may store the calculation result in an external storage device.

Next, the processing procedure of the data processing apparatus 20 will be described.

(Processing Procedure)

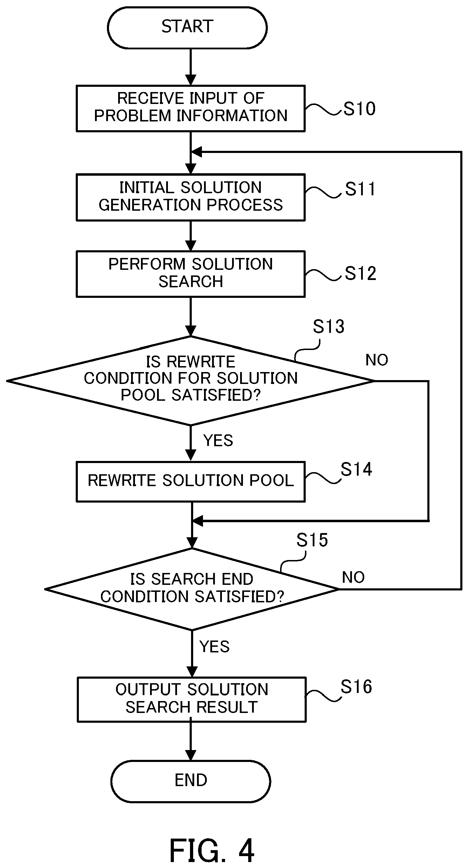

FIG. 4 is a flowchart illustrating a processing procedure for an example of a solution search performed by the data processing apparatus.

Step S10: The input unit 30 receives an input of problem information on a combinatorial optimization problem. The input problem information is stored in the problem information storage unit 31.

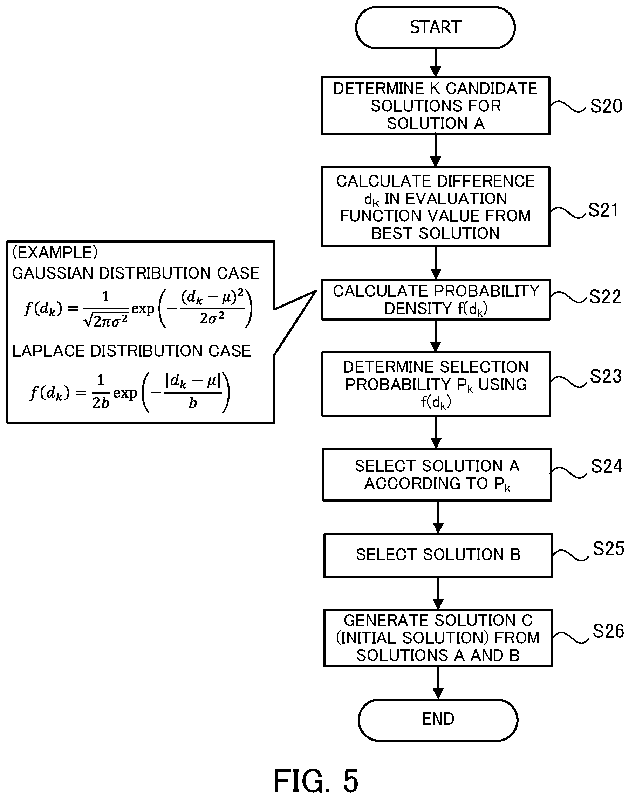

Step S11: The initial solution generation unit 34 generates an initial solution with the path relinking method using a plurality of solutions held in the solution pool 33. An example of the initial solution generation process using the path relinking method will be described later (see FIG. 5). If, however, a plurality of solutions are not held in the solution pool 33, then the initial solution generation unit 34 generates an initial solution randomly or according to a predetermined rule. The initial solution generation unit 34 may generate an initial solution in which all the values of the plurality of state variables included in the evaluation function are set to 1 or 0.

Step S12: The solution search unit 32 performs a solution search based on the problem information on the combinatorial optimization problem and the calculation conditions.

Step S13: The solution search unit 32 determines whether a rewrite condition for the solution pool 33 is satisfied. For example, if the solution obtained by the solution search is better than the worst solution among the N solutions held in the solution pool 33, the solution search unit 32 determines that the rewrite condition is satisfied.

In this connection, in order to suppress an increase in the number of rewrites, the solution search unit 32 may determine that the rewrite condition is satisfied when the solution obtained by the solution search is better than the best solution among the N solutions held in the solution pool 33.

If it is determined that the rewrite condition for the solution pool 33 is satisfied, the solution search unit 32 executes step S14. It is determined that the rewrite condition is not satisfied, the solution search unit 32 executes step S15.

Step S14: The solution search unit 32 rewrites the solution pool 33 by replacing the worst solution among the N solutions held in the solution pool 33 with the solution obtained by the current solution search.

Step S15: The solution search unit 32 determines whether a search end condition is satisfied. The solution search unit 32 determines that the search end condition is satisfied, for example, when the number of executions of the solution search (the number of trials) has reached a predetermined upper limit number of times or when a predetermined time has elapsed. If it is determined that the search end condition is satisfied, step S16 is executed. If it is determined that the search end condition is not satisfied, step S11 and subsequent steps are repeated.

Step S16: The output unit 35 outputs the best solution held in the solution pool 33, which is the best at the time of the search end condition being satisfied, as a solution search result for the combinatorial optimization problem, and the solution search process ends.

FIG. 5 is a flowchart illustrating a processing procedure for an example of an initial solution generation process.

Step S20: The initial solution generation unit 34 determines K candidate solutions for Solution A from the N solutions held in the solution pool 33. The K candidate solutions for Solution A correspond to the top K solutions (higher-ranked solutions) when the N solutions are sorted in descending order of the evaluation function values.

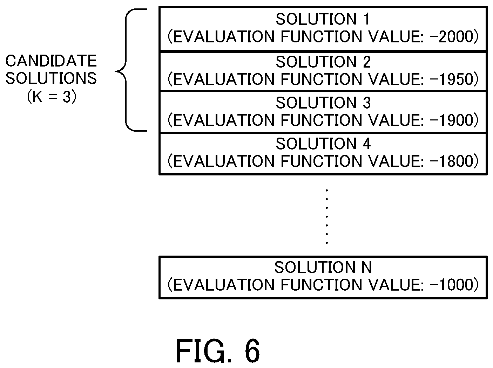

FIG. 6 illustrates an example of determining candidate solutions.

In the case of solving a problem that minimizes the evaluation function value, candidate solutions are determined, preferentially from the solution having the lowest evaluation function value, as illustrated in FIG. 6. FIG. 6 illustrates an example in which K (= 3) candidate solutions are determined in ascending order of evaluation function values among N solutions 1 to N held in the solution pool 33.

In the case where a plurality of solutions have the same evaluation function value, the initial solution generation unit 34 may rank the solutions based on their hash values that are generated from the state variables of the solutions.

FIG. 7 illustrates an example of generating hash values.

In the example of FIG. 7, the evaluation function values of the solutions a and b are both -2000. Therefore, for the solutions a and b, the initial solution generation unit 34 generates their hash values from their values of the state variables $x_1$ to $x_6$. This is because even if the evaluation function values are the same, the solutions may be different (i.e., the solutions differ in the values of the state variables). In the example of FIG. 7, the values of $x_5$ and $x_6$ differ between the solution a and the solution b.

The initial solution generation unit 34 generates the hash values using, for example, a predetermined checksum algorithm. In the example of FIG. 7, the hash values are generated using the Adler-32 checksum algorithm. The initial solution generation unit 34 determines that a solution with a lower hash value is ranked higher. In the example of FIG. 7, the solution a is higher-ranked than the solution b.

Thus, even if a plurality of solutions have the same evaluation function value, it is possible to determine K candidate solutions (higher-ranked solutions).

It should be noted that the above-described ranking method, which is used in the case where there are a plurality of solutions having the same evaluation function value, is an example, and the ranking method is not limited to this example. Random ranking may be performed for solutions having the same evaluation function value.

After the K candidate solutions for Solution A are determined, the following process is performed.

Step S21: The initial solution generation unit 34 calculates the difference $d_k$ between the evaluation function value of the best solution (highest-ranked solution) among the K candidate solutions (higher-ranked solutions) and the evaluation function value of each of the K candidate solutions.

Step S22: The initial solution generation unit 34 inputs $d_k$ to, for example, a probability density function (Gaussian distribution or Laplace distribution) as represented by Equation (2) or Equation (3) to calculate the probability density $f(d_k)$ for each of the K higher-ranked solutions. In the case where the probability density function of either Equation (2) or (3) is used, $\mu$ is set to 0.

Step S23: The initial solution generation unit 34 determines the selection probability $P_k$ using the calculated K probability densities $f(d_k)$. For example, the initial solution generation unit 34 normalizes $f(d_k)$ so that the sum of K $f(d_k)$ becomes 1, and sets the normalized $f(d_k)$ as $P_k$ of each higher-ranked solution. In the case where the evaluation function values of the K higher-ranked solutions are all the same, the initial solution generation unit 34 sets the selection probability of each of the K higher-ranked solutions to 1/K.

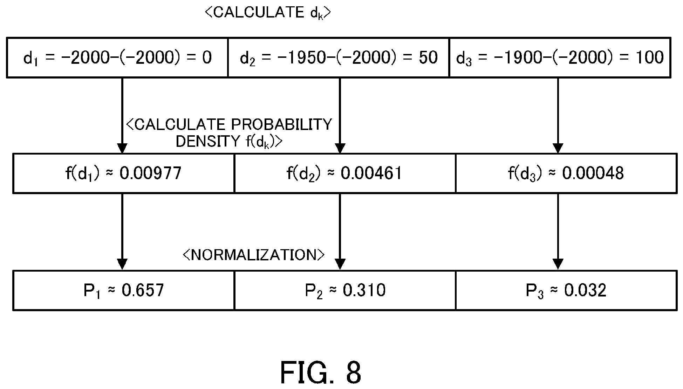

FIG. 8 illustrates an example of calculation of $d_k$ and $f(d_k)$ and an example of normalization.

In the case where three solutions, solution 1, solution 2, and solution 3, are determined as candidate solutions for Solution A as illustrated in FIG. 6, $d_k$ (= $d_1$) calculated for the solution 1, which is the highest-ranked solution, is 0. Further, $d_k$ (= $d_2$) calculated for the solution 2 is 50, and $d_k$ (= $d_3$) calculated for the solution 3 is 100.

In the case where the probability density function represented by Equation (2) is used, $f(d_k)$ (=$f(d_1)$) calculated for the solution 1 is approximately 0.00977. Further, $f(d_k)$ (= $f(d_2)$) calculated for the solution 2 is approximately 0.00461, and $f(d_k)$ (= $f(d_3)$) calculated for the solution 3 is approximately 0.00048.

In addition, $P_k$ (= $P_1$) for the solution 1 calculated by normalizing $f(d_1)$ to $f(d_3)$ is approximately 0.657. $P_k$ (= $P_2$) for the solution 2 is approximately 0.310, and $P_k$ (= $P_3$) for the solution 3 is approximately 0.032.

After $P_k$ is determined as described above, the following process is performed.

Step S24: The initial solution generation unit 34 selects Solution A from the K higher-ranked solutions according to the determined $P_k$.

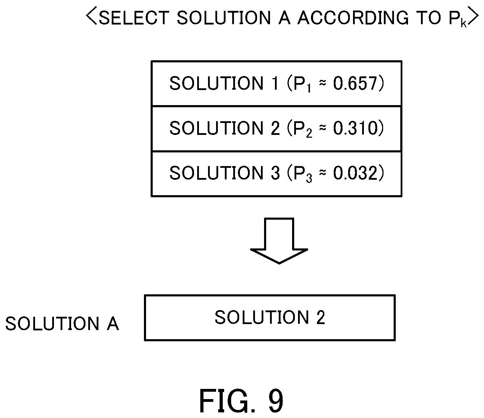

FIG. 9 illustrates an example of selecting Solution A.

As illustrated in FIG. 8, $P_k$ (= $P_1$) of the solution 1 is approximately 0.657, $P_k$ (= $P_2$) of the solution 2 is approximately 0.310, and $P_k$ (= $P_3$) of the solution 3 is approximately 0.032. The initial solution generation unit 34 stochastically selects any one of the solution 1, the solution 2, and the solution 3 as Solution A according to $P_1$ to $P_3$. Although the highest-ranked solution (best solution) is the solution 1, the solution 2 is selected as Solution A in the example of FIG. 9.

Step S25: The initial solution generation unit 34 selects Solution B different from Solution A from the N solutions of the solution pool 33.

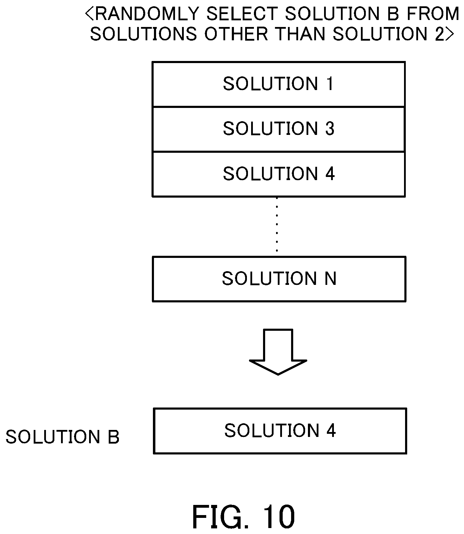

FIG. 10 illustrates an example of selecting Solution B.

One solution is randomly selected as Solution B from among the N solutions 1 to N excluding the solution 2 selected as Solution A. In the example of FIG. 10, the solution 4 is selected as Solution B.

In this connection, the initial solution generation unit 34 may select Solution B different from Solution A according to a predetermined rule, or may calculate $P_k$ as described above for each of the N solutions and select Solution B different from Solution A according to $P_k$.

Step S26: The initial solution generation unit 34 generates new Solution C as an initial solution with the path relinking method using the selected Solution A and Solution B.

FIG. 11 illustrates an example of generating Solution C.

Using the values of the state variables of Solution A as a base, the initial solution generation unit 34 replaces one or more of the state variables whose values are different from those of Solution B with the values of the corresponding state variables of Solution B, thereby generating Solution C.

In the example of FIG. 11, the values of the state variables $x_3$ $x_4$, $x_7$, and $x_8$ differ between Solution A and Solution B. The initial solution generation unit 34 generates Solution C by replacing the values of $x_3$ and $x_4$ of Solution A, which are included in these state variables, with the values of $x_3$ and $x_4$ of Solution B. Note that the state variables to be replaced and the number of such state variables are not limited to the above example.

As described above, the data processing apparatus 20 determines K higher-ranked solutions (candidate solutions for Solution A) from N solutions to the combinatorial optimization problem stored in the solution pool 33, based on the evaluation function values of the N solutions. Further, the data processing apparatus 20 determines, for each of the K higher-ranked solutions, a selection probability ($P_k$) such that higher-ranked solutions having evaluation function values closer to that of the highest-ranked solution (best solution) among the K higher-ranked solutions are more likely to be selected. Then, the data processing apparatus 20 selects Solution A from the K higher-ranked solutions according to $P_k$, selects Solution B different from Solution A from the N solutions, and generates Solution C with the path relinking method using the selected solutions A and B. The data processing apparatus 20 performs a solution search on the combinatorial optimization problem using Solution C as an initial solution. This makes it possible to efficiently search a wide search space, for the same reason as for the data processing apparatus 10 of the first embodiment. As a result, an improvement in the solving performance is expected.

Further, as illustrated in FIG. 8, the data processing apparatus 20 dynamically adjusts the selection probabilities $P_k$ according to the differences $d_k$ between the evaluation function value of the highest-ranked solution and the evaluation function value of each of the K higher-ranked solutions. As a result, it is possible to stochastically select solutions other than the highest-ranked solution (best solution) while giving importance to the highest-ranked solution.

(Modification)

In the above examples, the number of determined higher-ranked solutions (candidate solutions for Solution A) is fixed to K. Alternatively, K may be a variable value.

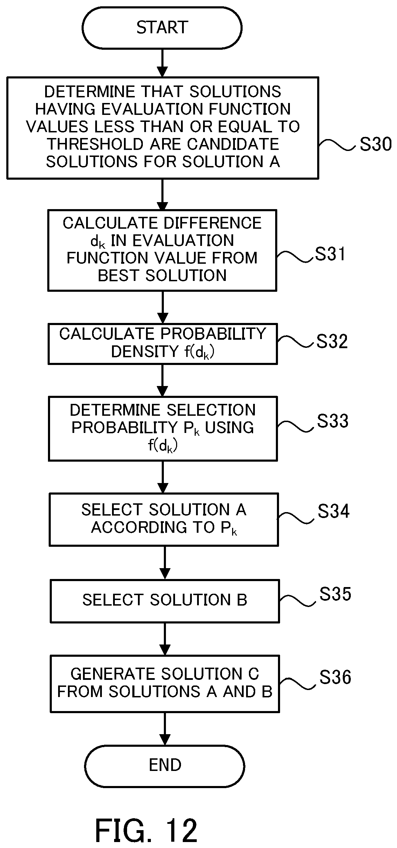

FIG. 12 is a flowchart illustrating a processing procedure for an example of an initial solution generation process according to a modification.

Instead of executing step S20 of determining K candidate solutions for Solution A as illustrated in FIG. 5, the initial solution generation process according to the modification determines that solutions having evaluation function values less than or equal to a threshold are candidate solutions (higher-ranked solutions) for Solution A (step S30). The threshold is set, for example, based on evaluation function values that are determined to indicate good solutions on the basis of execution results of similar instances similar in the past. In order to avoid a situation in which no candidate solution is selected when there is no solution whose evaluation function value is less than or equal to the threshold, a minimum number of K may be set. In the case of solving a problem that maximizes the evaluation function value, solutions having evaluation function values greater than or equal to a threshold may be set as candidate solutions for Solution A in step S30.

Steps S31 to S36 are executed in the same manner as steps S21 to S26 illustrated in FIG. 5.

In step S30, the number K of candidate solutions may vary each time the solution pool 33 is rewritten in step S14 of FIG. 4.

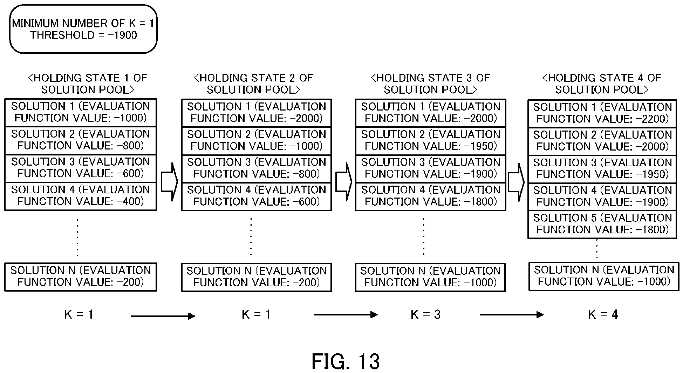

FIG. 13 illustrates an example in which the number K of candidate solutions varies. Here, it is assumed that the minimum number of K is 1, and the threshold for the evaluation function value is -1900.

As illustrated in FIG. 13, when the solution pool 33 is in a holding state 1, the solution 1 having the evaluation function value of -1000 is the best solution, and thus there is no solution whose evaluation function value is less than or equal to the threshold (= -1900). Therefore, K is 1, which is the minimum number. When the solution pool 33 is rewritten and therefore enters a holding state 2, the evaluation function value of the solution 1 is -2000, and thus there is only one solution whose evaluation function value is less than or equal to the threshold. Therefore, K is 1.

When the solution pool 33 is further rewritten and enters a holding state 3, there are three solutions whose evaluation function values are less than or equal to the threshold: the solution 1, the solution 2, and the solution 3. Therefore, K becomes 3. When the solution pool 33 is further rewritten and enters a holding state 4, there are four solutions whose evaluation function values are less than or equal to the threshold: the solution 1, the solution 2, the solution 3, and the solution 4. Therefore, K becomes 4.

As described above, the initial solution generation process according to the modification determines candidate solutions (higher-ranked solutions) for Solution A on the comparison results of each evaluation function value with the threshold. As a result, candidate solutions for Solution A are determined from among solutions that are highly likely to be good solutions. Determining Solution A from such candidate solutions enables a more efficient solution search for a good solution.

As described above, the processing contents of FIGS. 4, 5, and 12 are implemented by causing the data processing apparatus 20 to execute a program.

The program may be stored in a computer-readable storage medium (for example, the storage medium 26a). As the storage medium, for example, a magnetic disk, an optical disc, a magneto-optical disk, a semiconductor memory, or another may be used. Magnetic disks include an FD and an HDD. Optical discs include a CD, a CD-recordable (CD-R), CD-rewritable (CD-RW), a DVD, and a DVD-R, and a DVD-RW. The program may be stored on a portable storage medium and distributed. In this case, the program may be copied from the portable storage medium to another storage medium (for example, the HDD 23) and executed.

(Experimental Examples)

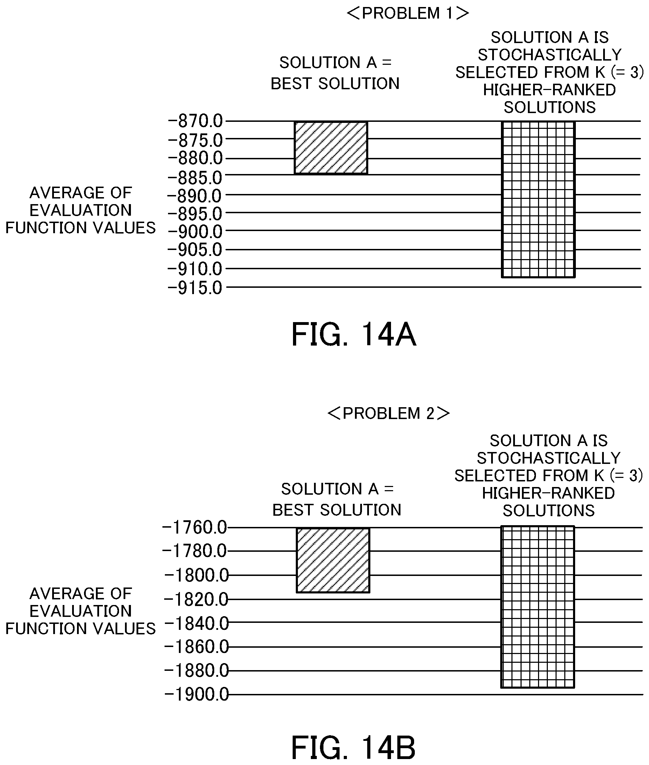

FIGS. 14A and 14B illustrate experimental examples of solution searches for combinatorial optimization problems. FIG. 14A illustrates a result of performing a solution search on the first problem (problem 1) of two problems related to IT drug discovery, and FIG. 14B illustrates a result of performing a solution search on the second problem (problem 2) of the two problems related to the IT drug discovery. In FIGS. 14A and 14B, the vertical axis represents the average of the evaluation function values obtained by the solution search using 20 types of random number seeds.

Each of FIGS. 14A and 14B illustrates the result of a solution search in which Solution A is stochastically selected from the K (= 3) higher-ranked solutions and an initial solution is generated in the process of FIG. 5, and also, for comparison, the result of a solution search in which the best solution is selected as Solution A and an initial solution is generated. The tabu search was used as a solution search method. In the case where there were a plurality of solutions having the best evaluation function value, the solution having the lowest hash value generated as illustrated in FIG. 7 was selected as the best solution. The probability density function used was the Gaussian distribution represented by Equation (2). In addition, Solution B was randomly selected from solutions different from Solution A among the solutions held in the solution pool 33.

FIGS. 14A and 14B reveal that, for both problems, the solution search performed in accordance with the process of FIG. 5 resulted in a better solution (a solution having a lower average value of evaluation function values) than the solution search in which the best solution was selected as Solution A and an initial solution was generated.

(Another Example of Data Processing Apparatus)

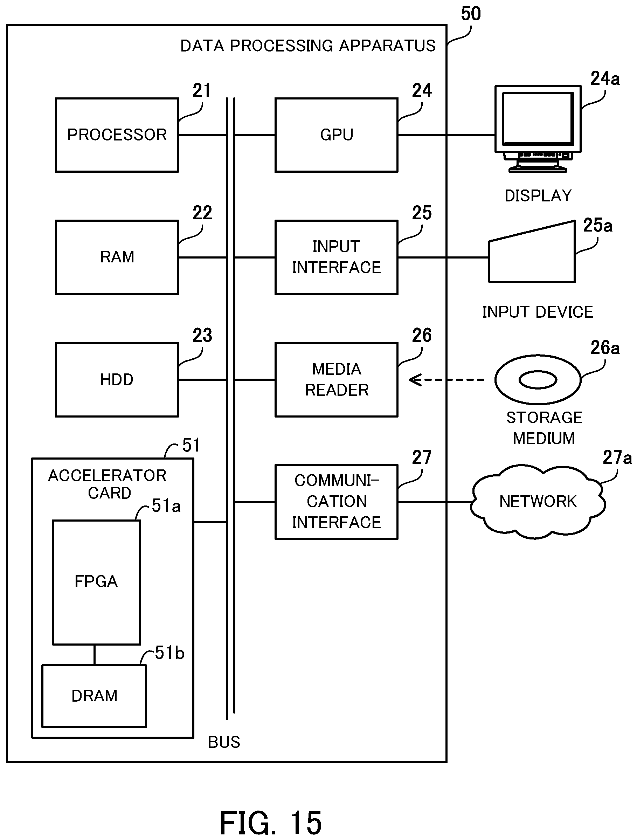

FIG. 15 illustrates another example of the data processing apparatus. In FIG. 15, the same elements as those illustrated in FIG. 2 are denoted by the same reference numerals.

The data processing apparatus 50 includes an accelerator card 51 connected to the bus.

The accelerator card 51 is a hardware accelerator that searches for solutions to combinatorial optimization problems. The accelerator card 51 includes an FPGA 51a and a dynamic RAM (DRAM) 51b.

In the data processing apparatus 50, the FPGA 51a and the DRAM 51b perform at least part (for example, the solution search process) of the processes of the processing unit 12 and the storage unit 11 illustrated in FIG. 1 or at least part (for example, the function of the solution search unit 32) of the functions illustrated in FIG. 3. In this case, the processing unit 12 and the storage unit 11 illustrated in FIG. 1 or the functions illustrated in FIG. 3 are implemented by various circuits constructed in the FPGA 51a, a memory in the FPGA 51a, or the DRAM 51b.

A plurality of accelerator cards 51 may be provided.

One aspect of the computer program, the data processing apparatus, and the data processing method of the present disclosure has been described above with reference to the embodiments. Note that these are merely examples, and are not limited to the above description.

In one aspect, it is possible to efficiently search for a solution in a wide search space.

**Claims**

1. A computer program that causes a computer to perform a process comprising:

    determining, from a plurality of solutions to a combinatorial optimization problem, a plurality of higher-ranked solutions, based on evaluation function values of the plurality of solutions, the plurality of solutions being stored in storage means (11);
    determining selection probabilities for the plurality of higher-ranked solutions, respectively, such that a higher-ranked solution having the evaluation function value closer to the evaluation function value of a highest-ranked solution among the plurality of higher-ranked solutions than the evaluation function value of another higher-ranked solution is more likely to be selected than said another higher-ranked solution;
    selecting a first solution from the plurality of higher-ranked solutions according to the selection probabilities;
    selecting a second solution from the plurality of solutions, the second solution being different from the first solution;
    generating a third solution with a path relinking method using the selected first solution and the selected second solution; and
    performing a solution search on the combinatorial optimization problem using the third solution as an initial solution.

2. The computer program according to claim 1, wherein the process further includes

calculating differences between the evaluation function value of the highest-ranked solution and the evaluation function value of each of the plurality of higher-ranked solutions; and

calculating probability densities for the plurality of higher-ranked solutions, respectively, based on the differences; and

determining the selection probabilities for the plurality of higher-ranked solutions, respectively, by normalizing the probability densities.

3. The computer program according to claim 2, wherein the probability densities are calculated according to a Gaussian distribution or a Laplace distribution.

4. The computer program according to any preceding claim, wherein a number of the plurality of higher-ranked solutions is determined based on comparison results between a threshold for the evaluation function values and the evaluation function value of each of the plurality of solutions.

5. The computer program according to any preceding claim, wherein the determining of the plurality of higher-ranked solutions includes ranking, upon determining that two solutions among the plurality of solutions have an identical evaluation function value, the two solutions based on hash values of the two solutions, the hash values each being generated based on values of state variables representing the corresponding one of the two solutions.

6. A data processing apparatus comprising:

storage means (11) for storing a plurality of solutions to a combinatorial optimization problem; and
processing means (12) for

determining, from the plurality of solutions, a plurality of higher-ranked solutions, based on evaluation function values of the plurality of solutions,
determining selection probabilities for the plurality of higher-ranked solutions, respectively, such that a higher-ranked solution having the evaluation function value closer to the evaluation function value of a highest-ranked solution among the plurality of higher-ranked solutions than the evaluation function value of another higher-ranked solution is more likely to be selected than said another higher-ranked solution,
selecting a first solution from the plurality of higher-ranked solutions according to the selection probabilities,
selecting a second solution from the plurality of solutions, the second solution being different from the first solution,
generating a third solution with a path relinking method using the selected first solution and the selected second solution, and
performing a solution search on the combinatorial optimization problem using the third solution as an initial solution.

7. A data processing method executed by a computer, the data processing method comprising:

determining, from a plurality of solutions to a combinatorial optimization problem, a plurality of higher-ranked solutions, based on evaluation function values of the plurality of solutions, the plurality of solutions being stored in storage means (11);
determining selection probabilities for the plurality of higher-ranked solutions, respectively, such that a higher-ranked solution having the evaluation function value closer to the evaluation function value of a highest-ranked solution among the plurality of higher-ranked solutions than the evaluation function value of another higher-ranked solution is more likely to be selected than said another higher-ranked solution;
selecting a first solution from the plurality of higher-ranked solutions according to the selection probabilities;
selecting a second solution from the plurality of solutions, the second solution being different from the first solution;
generating a third solution with a path relinking method using the selected first solution and the selected second solution; and
performing a solution search on the combinatorial optimization problem using the third solution as an initial solution.

BETTER

EVALUATION FUNCTION VALUE

| SOLUTION 1 |
| SOLUTION 2 |
| SOLUTION 3 |
| SOLUTION 4 |
| SOLUTION 5 |

| SOLUTION N |

WORSE

S1
DETERMINE K HIGHER-RANKED SOLUTIONS

S2
CALCULATE SELECTION PROBABILITIES

S3
SELECT SOLUTION A ACCORDING TO SELECTION PROBABILITIES

S4
SELECT SOLUTION B

S5
EXECUTE PATH RELINKING METHOD (GENERATE SOLUTION C)

S6
PERFORM SOLUTION SEARCH USING SOLUTION C AS INITIAL SOLUTION

DATA PROCESSING APPARATUS 10

PROCESSING UNIT 12

STORAGE UNIT 11

SOLUTION POOL 11a

FIG. 1

**DATA PROCESSING APPARATUS** 20

PROCESSOR 21

GPU 24

DISPLAY 24a

RAM 22

INPUT INTERFACE 25

INPUT DEVICE 25a

HDD 23

MEDIA READER 26

STORAGE MEDIUM 26a

COMMUNI-CATION INTERFACE 27

NETWORK 27a

BUS

# FIG. 2

20

DATA PROCESSING APPARATUS

INPUT UNIT  30

PROBLEM
INFORMATION
STORAGE UNIT  31

33

SOLUTION POOL

INITIAL SOLUTION
GENERATION UNIT  34

SOLUTION
SEARCH UNIT  32

OUTPUT UNIT  35

FIG. 3

```
                    ┌──────────────┐
                    │    START     │
                    └──────┬───────┘
                           │
                           ▼
            ┌──────────────────────────┐
            │   RECEIVE INPUT OF       │ ～S10
            │  PROBLEM INFORMATION     │
            └──────────────┬───────────┘
                           │
                           ▼
            ┌──────────────────────────┐
            │   INITIAL SOLUTION       │ ～S11
            │  GENERATION PROCESS      │
            └──────────────┬───────────┘
                           │
                           ▼
            ┌──────────────────────────┐
            │   PERFORM SOLUTION       │ ～S12
            │       SEARCH             │
            └──────────────┬───────────┘
                           │
                           ▼
                         S13
                  ◇ IS REWRITE ◇       NO
              CONDITION FOR SOLUTION ──────┐
                POOL SATISFIED?            │
                           │               │
                          YES              │
                           ▼               │
            ┌──────────────────────────┐   │
            │  REWRITE SOLUTION POOL   │～S14│
            └──────────────┬───────────┘   │
                           │◄──────────────┘
                           ▼
                         S15
                 ◇ IS SEARCH END ◇     NO
               CONDITION SATISFIED? ───────┐
                           │
                          YES
                           ▼
            ┌──────────────────────────┐
            │   OUTPUT SOLUTION        │ ～S16
            │   SEARCH RESULT          │
            └──────────────┬───────────┘
                           │
                           ▼
                    ┌──────────────┐
                    │     END      │
                    └──────────────┘
```

# FIG. 4

START

DETERMINE K CANDIDATE SOLUTIONS FOR SOLUTION A ~ S20

CALCULATE DIFFERENCE $d_k$ IN EVALUATION FUNCTION VALUE FROM BEST SOLUTION ~ S21

CALCULATE PROBABILITY DENSITY $f(d_k)$ ~ S22

DETERMINE SELECTION PROBABILITY $P_k$ USING $f(d_k)$ ~ S23

SELECT SOLUTION A ACCORDING TO $P_k$ ~ S24

SELECT SOLUTION B ~ S25

GENERATE SOLUTION C (INITIAL SOLUTION) FROM SOLUTIONS A AND B ~ S26

END

(EXAMPLE)
GAUSSIAN DISTRIBUTION CASE

$$f(d_k) = \frac{1}{\sqrt{2\pi\sigma^2}} \exp\left(-\frac{(d_k - \mu)^2}{2\sigma^2}\right)$$

LAPLACE DISTRIBUTION CASE

$$f(d_k) = \frac{1}{2b} \exp\left(-\frac{|d_k - \mu|}{b}\right)$$

FIG. 5

CANDIDATE
SOLUTIONS
(K = 3)

| SOLUTION 1 (EVALUATION FUNCTION VALUE: −2000) |
| --- |
| SOLUTION 2 (EVALUATION FUNCTION VALUE: −1950) |
| SOLUTION 3 (EVALUATION FUNCTION VALUE: −1900) |
| SOLUTION 4 (EVALUATION FUNCTION VALUE: −1800) |

⋮

| SOLUTION N (EVALUATION FUNCTION VALUE: −1000) |
| --- |

# FIG. 6

| | EVALUATION FUNCTION VALUE | STATE VARIABLE VALUE | HASH VALUE |
|---|---|---|---|
| SOLUTION a | −2000 | $x_1$ $x_2$ $x_3$ $x_4$ $x_5$ $x_6$<br>0 1 1 0 0 1 | **04000124** |
| SOLUTION b | −2000 | $x_1$ $x_2$ $x_3$ $x_4$ $x_5$ $x_6$<br>0 1 1 0 1 0 | **04010124** |

## FIG. 7

<CALCULATE $d_k$>

| $d_1 = -2000-(-2000) = 0$ | $d_2 = -1950-(-2000) = 50$ | $d_3 = -1900-(-2000) = 100$ |
|---|---|---|

<CALCULATE PROBABILITY DENSITY $f(d_k)$>

| $f(d_1) \approx 0.00977$ | $f(d_2) \approx 0.00461$ | $f(d_3) \approx 0.00048$ |
|---|---|---|

<NORMALIZATION>

| $P_1 \approx 0.657$ | $P_2 \approx 0.310$ | $P_3 \approx 0.032$ |
|---|---|---|

# FIG. 8

⟨SELECT SOLUTION A ACCORDING TO $P_k$⟩

| SOLUTION 1 ($P_1 \approx 0.657$) |
| SOLUTION 2 ($P_2 \approx 0.310$) |
| SOLUTION 3 ($P_3 \approx 0.032$) |

⬇

SOLUTION A | SOLUTION 2 |

# FIG. 9

<RANDOMLY SELECT SOLUTION B FROM SOLUTIONS OTHER THAN SOLUTION 2>

| SOLUTION 1 |
|:---:|
| SOLUTION 3 |
| SOLUTION 4 |

| SOLUTION N |
|:---:|

SOLUTION B

| SOLUTION 4 |
|:---:|

## FIG. 10

|  | $x_1$ | $x_2$ | $x_3$ | $x_4$ | $x_5$ | $x_6$ | $x_7$ | $x_8$ | $x_9$ | $x_{10}$ |
|---|---|---|---|---|---|---|---|---|---|---|
| SOLUTION A | 0 | 1 | 1 | 0 | 1 | 0 | 0 | 1 | 1 | 0 |

| SOLUTION B | 0 | 1 | 0 | 1 | 1 | 0 | 1 | 0 | 1 | 0 |

| SOLUTION C | 0 | 1 | 0 | 1 | 1 | 0 | 0 | 1 | 1 | 0 |

## FIG. 11

FIG. 12

MINIMUM NUMBER OF K = 1
THRESHOLD = −1900

| <HOLDING STATE 1 OF SOLUTION POOL> | <HOLDING STATE 2 OF SOLUTION POOL> | <HOLDING STATE 3 OF SOLUTION POOL> | <HOLDING STATE 4 OF SOLUTION POOL> |
|---|---|---|---|
| SOLUTION 1 (EVALUATION FUNCTION VALUE: −1000) | SOLUTION 1 (EVALUATION FUNCTION VALUE: −2000) | SOLUTION 1 (EVALUATION FUNCTION VALUE: −2000) | SOLUTION 1 (EVALUATION FUNCTION VALUE: −2200) |
| SOLUTION 2 (EVALUATION FUNCTION VALUE: −800) | SOLUTION 2 (EVALUATION FUNCTION VALUE: −1000) | SOLUTION 2 (EVALUATION FUNCTION VALUE: −1950) | SOLUTION 2 (EVALUATION FUNCTION VALUE: −2000) |
| SOLUTION 3 (EVALUATION FUNCTION VALUE: −600) | SOLUTION 3 (EVALUATION FUNCTION VALUE: −800) | SOLUTION 3 (EVALUATION FUNCTION VALUE: −1900) | SOLUTION 3 (EVALUATION FUNCTION VALUE: −1950) |
| SOLUTION 4 (EVALUATION FUNCTION VALUE: −400) | SOLUTION 4 (EVALUATION FUNCTION VALUE: −600) | SOLUTION 4 (EVALUATION FUNCTION VALUE: −1800) | SOLUTION 4 (EVALUATION FUNCTION VALUE: −1900) |
|  |  |  | SOLUTION 5 (EVALUATION FUNCTION VALUE: −1800) |
| SOLUTION N (EVALUATION FUNCTION VALUE: −200) | SOLUTION N (EVALUATION FUNCTION VALUE: −200) | SOLUTION N (EVALUATION FUNCTION VALUE: −1000) | SOLUTION N (EVALUATION FUNCTION VALUE: −1000) |

K = 1 ⟶ K = 1 ⟶ K = 3 ⟶ K = 4

FIG. 13

<PROBLEM 1>

AVERAGE OF
EVALUATION
FUNCTION VALUES

SOLUTION A =
BEST SOLUTION

SOLUTION A IS
STOCHASTICALLY
SELECTED FROM K (= 3)
HIGHER-RANKED
SOLUTIONS

-870.0
-875.0
-880.0
-885.0
-890.0
-895.0
-900.0
-905.0
-910.0
-915.0

## FIG. 14A

<PROBLEM 2>

AVERAGE OF
EVALUATION
FUNCTION VALUES

SOLUTION A =
BEST SOLUTION

SOLUTION A IS
STOCHASTICALLY
SELECTED FROM K (= 3)
HIGHER-RANKED
SOLUTIONS

-1760.0
-1780.0
-1800.0
-1820.0
-1840.0
-1860.0
-1880.0
-1900.0

## FIG. 14B

FIG. 15

Europäisches
Patentamt
European
Patent Office
Office européen
des brevets

# EUROPEAN SEARCH REPORT

**Application Number**

EP 25 19 0903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Laguna Manuel ET AL: "20 years of Greedy Randomized Adaptive Search Procedures with Path Relinking", arXiv.org, 31 December 2023 (2023-12-31), pages 1-28, XP093360342, Retrieved from the Internet: URL:https://arxiv.org/abs/2312.12663 [retrieved on 2026-01-27] * algorithm 3; page 10 - page 11 * ----- | 1-7 | INV. G06F17/11 G06F17/00 G06F17/10 |

**TECHNICAL FIELDS SEARCHED (IPC)**

G06F

The present search report has been drawn up for all claims

| Place of search | Date of completion of the search | Examiner |
|---|---|---|
| The Hague | 11 February 2026 | Karaliolios, N |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020235649 A

### Non-patent literature cited in the description

- Tabu search and adaptive memory programing - Advances, applications and challenges. **F. GLOVER**. Interfaces in Computer Science and Operations Research. Kluwer, 1996, 1-75

- **Y. WANG et al.** Path relinking for unconstrained binary quadratic programming. *European Journal of Operational Research*, 2012, vol. 223, 595-604